# EUROPEAN PATENT APPLICATION

(11) **EP 1 404 111 A2**
(43) Date of publication of application: **31.03.2004**
(21) Application number: 03022106.3
(22) Date of filing: 29.09.2003
(51) Int. Cl.: H04N 1/21

(54) **Photography system**

(30) Priority: 30.09.2002 JP 2002287350
(71) Applicant: FUJI PHOTO FILM CO., LTD., Kanagawa 250-01 (JP)
(72) Inventor: Kinjo, Naoto, Fuji Photo Film Co., Ltd., Ashigarakami-gun Kanagawa-ken (JP)
(74) Representative: Klunker . Schmitt-Nilson . Hirsch

(57) **Abstract**

Convenience of a digital camera is improved and the performance specialized for each function is also improved. A photography system 1 includes a photography device 10 by which the photographic objects are photographed to acquire the image information, and a portable data processing device 20 which is formed separately from the photography device 10 and stores the image information. The photography device 10 has an image information transmission means 12 that transmits the image information acquired to the data processing device 20 directly.

## Description

### BACKGROUND OF THE INVENTION

### Field of the Invention

The present invention relates to a photography system comprising a photography device and a data processing device that stores image information photographed by the photography device and, more particularly, to a photography system that transmits the photographed image information from the photography device to the data processing device.

### Description of the Related Art

Conventionally, in a photography device such as a digital camera, image information acquired by photography photographic objects is subjected to image processing such as encoding and compression by an image processing means provided in the main unit of the device, and then stored in a storage medium such as a Smart Media (registered trademark) loaded in the device. That is, a series of work from photography to producing image information of predetermined data format is done by a single photography device and the produced image information is stored in the storage medium loaded in the device.

Since the storage capacity of the storage medium used for storing the image information is limited, the quantity of the image information that can be photographed also becomes limited. Therefore, there is proposed a photography system in which the image information photographed by a digital camera is not accumulated or stored in the storage medium but is temporarily stored in a memory within the camera main unit, which is then transmitted to an image management server or the like via a network.

Specifically, a system has been proposed in which the image information photographed by a digital camera or the like is transmitted to a laboratory shop via data transmission means such as the Internet; the laboratory shop stores the transmitted image information in an image recording file to print; and provides the printed pictures to the user so that a large-capacity storage medium is not required on the camera side (see Japanese Unexamined Patent Publication No. 9 (1997) -322114) . According to this method, since the photographed image information is transmitted to the laboratory shop, many images can be acquired without worrying about the storage capacity of the digital camera side.

However, according to the system proposed in Japanese Unexamined Patent Publication No. 9(1997)-322114, when the photographed image information is transferred to the laboratory shop, the digital camera needs to be connected to the Internet. Thus, connection fee for using the Internet arises, giving users a financial burden.

Furthermore, in the conventional digital camera, a photographic section, a data recording section, and an image processing means are formed integrally. Therefore, when the user wants to replace, for example, the charge-coupled device (CCD) with the one having a larger number of pixels or wants to accelerate the processing of the image processing means, the digital camera itself needs to be replaced, thus giving the user a financial burden.

### SUMMARY OF THE INVENTION

Therefore, the object of the invention is to provide a photography system capable of solving the problem of the storage capacity of the digital camera, improving the convenience, and further improving the specialized performance for each specific function such as photography and image processing.

The photography system of the present invention includes a photography device that performs photography of the photographic objects to acquire the image information and a portable data processing device that stores the image information acquired by the photography device, wherein the photography device further includes an image information transmission means that directly transmits the acquired image information to the data processing device.

Here, "the photography device" is a specialized device, such as an image pickup lens for photography and a CCD for an image pickup function. Therefore the photography device may have a temporary lower-capacity memory, while having no large-capacity storage device. In addition, the photography device may be portable or may be fixed to a specific photography location.

Further, the photography system may include at least one photography device and one data processing device, or may include a plurality of photography devices and one data processing device. Alternatively, the photography system may include one photography device and a plurality of data processing devices, or further, may include a plurality of photography devices and a plurality of data processing devices.

At this time, the photography device has unique identification information, and the image information transmission means may have a function to transmit the identification information and the image information to a plurality of the data processing devices.

In addition, the data processing device receives the image information from a plurality of the photography devices, and may have a received image selection means that selects the image information to be received, according to the unique identification information allocated to each photography device, transmitted from the image information transmission means.

Note that the data processing device may have correction conditions to correct the image information for each of the plurality of photography devices so that the photographed image information is subjected to various known correction processing to obtain a proper photographic image.

Also, the data processing device may have a function to encrypt and store the image information.

Further, the data processing device may be of any construction as long as it has a large-capacity storage medium to store the image information acquired by the photography device. The data processing device may have a function to store the image information itself transmitted from the photography device, or may have an image processing means that encodes the image information and a storage means that stores the image information encoded by the image processing means to store the encoded image information.

In addition, the image processing means may include a photography condition acquiring means that acquires a photography condition when the photography device acquires the image information; a database that stores reference image information obtained by photographing an arbitrary photographic object in advance; a reference image information retrieving means that retrieves the reference image information most similar to the image information out of the database based on the photography condition acquired by the photography condition acquiring means;a difference calculation means that calculates a difference between the reference image information retrieved by the reference image information retrieving means and the image information; and an encoding means that encodes the difference between the reference image information calculated by the difference calculation means and the image information.

Moreover, the data processing device may include a photography condition acquiring means that acquires a photography condition when the photography device acquires the image information; a database that stores reference image information obtained by photographing an arbitrary photographic object in advance and a reference photography condition when the photographic object is photographed; a reference image information retrieving means that retrieves reference image information most similar to the photographed image information out of the database, based on the photography condition acquired by the photography condition acquiring means and the reference photography condition; an image comparison means that compares the reference image information retrieved by the reference image information retrieving means and the image information; a main photographic object detecting means that detects a main photographic object in the image information based on a comparison result obtained by the image comparison means; a photography state analyzing means that analyses a photography state of the main photographic object of the image information detected by the main photographic object detecting means; and an error processing means in which processing is performed so that photography to acquire the image information of the photographic objects in a good photography state may be performed when the photography state analyzed by the photography state analyzing means is analyzed to be poor.

Further, the data processing device may have a data transfer means that transfers data to an external device.

According to the photography systemof the present invention, the photography device that performs photography of photographic objects and acquires the image information, and the portable data processing device that encodes and stores the image information acquired by the photography device are formed separately. With this structure, when the photography device only or the data processing device only is required to be improved in function, only the photography device or only the data processing device may be replaced. Thus, improvement in the performance of each specialized function can be achieved, and it becomes unnecessary to replace a complete digital camera.

Also, the data processing device is portable and when the image information photographed by the photography device is directly transmitted to the data processing device, the image information can surely and expediently be stored without being affected by a busy state of the network.

Furthermore, since the photography device and the data processing device are separately formed, miniaturization and weight saving of the photography device operated for photography can be achieved. Simultaneously, a digital signal processor (DSP) for image processing and recording medium can be free from restrictions in sizes thereof. Therefore, image information can be subjected to a high-quality processing at high-speed by use of a higher-quality DSP and also many photographed images can be stored by enlarging the capacity of the storage medium.

Note that, when the photography device is configured so as to send image information to the data processing device, it becomes possible, for example, that all of the members of a family have photography devices and store the image information acquired by each of the family members in the data processing device. Also, in the case of a group tour, in which each of the group members has a photography device and a data processing device, the image information acquired by the photography device possessed by each of the group members may be transmitted to the data processing device possessed by each member to allow sharing of the image information.

Furthermore, if one of a plurality of users who possess the photography devices possesses the data processing device, the image information photographed by the plurality of users can be stored in the data processing device. Thus, usability of the photography device can be improved. In addition, in the case that the image information photographed by one photography device is to be distributed among a plurality of users, for example, the image information can be distributed to each user on the spot. Therefore, it becomes unnecessary to copy the image information (additional prints) later, and thus convenience for the user is enhanced.

At this time, the image information transmission means of the photography device has a function to transmit the identification information unique to the photography device. Then, according to thetransmittedidentification information,the data processing device decides whether or not the image information is received. This enables only image information photographed by a specified user to be stored in the data processing device.

If the data processing device has an image processing means that encodes the image information and a storage means that stores the image information encoded by the image processing means, the data size of the image information acquired by the photography device can be made small. Therefore, a large quantity of image information can be stored in the data processing device.

Also, when the data processing device is configured to have the image processing means that classifies the image information encoded for each identification information, and stores the image information in the storage means, the image information can be classified and stored for each photography device and for each user, eliminating the classification work by the user. Thus, usability of the data processing device can be improved.

In addition, when the data processing device includes correction conditions for correcting image information for each of a plurality of the photography devices, it becomes possible to perform optimal image processing for each photography device. Thus, the quality of the image can be improved.

Furthermore, if the data processing device is configured to include a photography condition acquiring means that acquires a photography condition when the photography device acquires the image information; a database that stores reference image information obtained by photographing an arbitrary photographic object in advance; a reference image information retrieving means that retrieves the reference image information most similar to the image information out of the database; a difference calculation means that calculates a difference between the reference image information retrieved by the reference image information retrieving means and the image information; and an encoding means that encodes the difference between the reference image information and the image information calculated by the difference calculation means, then data size of the image information to be stored in the data processing device can be reduced, thereby enabling storage of a larger quantity of image information in the data processing device.

In addition, if the data processing device is designed to include a photography condition acquiring means that acquires a photography condition when the photography device acquires the image information; a database that stores reference image information obtained by photographing an arbitrary photographic object in advance and a reference photography condition when the photographic object isphotographed;a reference image information retrieving means that retrieves the reference image information most similar to the photographed image information out of the database based on the photography condition acquired by the photography condition acquiring means and the reference image condition; an image comparison means that compares the reference image information retrieved by the reference image information retrieving means and the image information; a main photographic object detecting means that detects a main photographic object in the image information based on a comparison result obtained by the image comparison means; a photography state analyzing means that analyses a photography state of the main photographic object of the image information detected by the main photographic object detecting means; and an error processing means in which processing is performed so that photography to acquire the image information of the photographic objects in a good photography state may be performed when the photography state analyzed by the photography state analyzing means is analyzed to be poor, then photography to acquire image information of photographic objects in a good photography state, e.g., photography once again can be performed even when photography was performed in a poor photography state due to wobbling, for example.

Furthermore, if the data processing device is designed to include a data transmission means for transmitting data to an external device, the stored image information can be, for example, transmitted to a laboratory shop or the like.

Also, when the data processing device encrypts and stores the image information in the storage medium, the encoded image is decrypted only at a specified laboratory shop and printing or the like of the stored image information is performed, thus preventing the photographed image information from being seen by third parties.

Moreover, when this photography system is applied for the case where photographic objects are limited, in places such as a zoo, a museum, and a factory, even if the photography device is fixed to a specific location for photography the photographic objects within a specific range alone, users can use the fixed photography device so that the data processing device receives images from the fixed photography devices and store the images. Thus, the supervisors of such places can limit the places to be photographed and the users can also get the photography service in the places where photography can be performed.

### BRIEF DESCRIPTION OF THE DRAWINGS

Figure 1 is a block diagram showing the first preferred embodiment of a photography system of the present invention.
Figure 2A and Figure 2B are schematic views showing examples of using the photography system of the present invention.
Fig.3 is a block diagram showing the second embodiment of the photography system of the present invention.
Fig.4 is a block diagram showing an example of the image processing means in a data processing device.
Fig.5 is a schematic view showing an example of division of the image information in the image processing means.
Fig.6 is a block diagram showing the third embodiment of the photography system of the present invention.
Fig. 7 is a block diagram showing an example of a photography aiding means in the data processing device of Fig.6.
Fig.8 is a flowchart showing an operation example of the photography aiding means of Fig.7.

### DESCRIPTION OF THE PREFERRED EMBODIMENTS

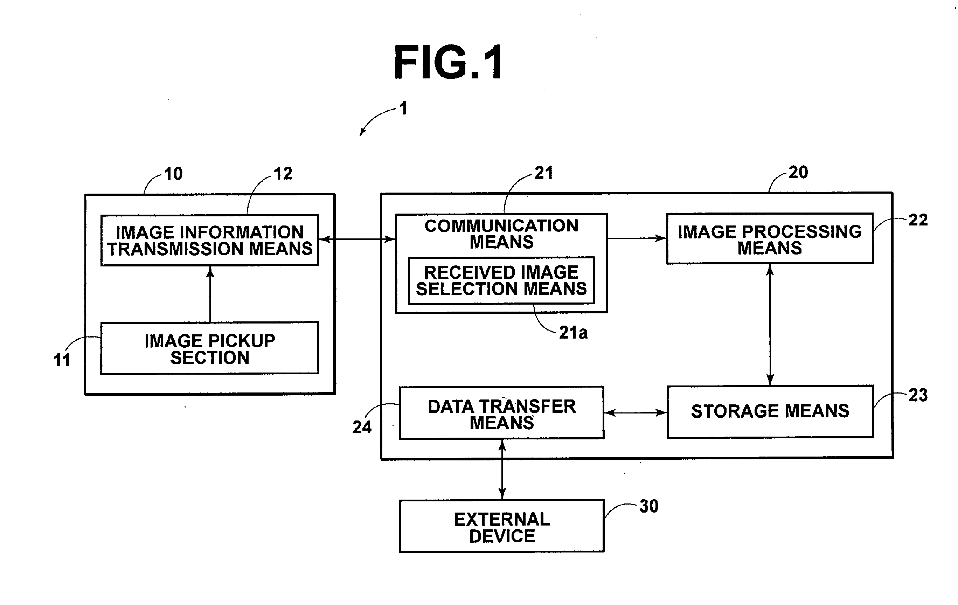

Preferred embodiments of the present invention will be explained below with reference to the attached drawings. Figure 1 is a block diagram showing the first preferred embodiment of the photography system of the present invention. First, with reference to Figure 1, a photography device 10 of a photography system 1 will be explained. The photography device 10 includes only an image pickup section 11 and an image information transmission means 12 in the main unit. The image pickup section 11 includes an image pickup optical system that condenses light of photographic objects and an image pickup element composed of, for example, a CCD or the like that receives the light of the photographic objects condensed by the image pickup optical system and outputs the image information. The acquired image information is transmitted to the image information transmission means 12.

The image information transmission means 12 has a function to directly transmit the acquired image information to the data processing device 20. Further, the image information transmission means 12 transmits the identification information unique to each photography device 10 together with the image information.

As described above, the photography device 10 is formed with only the image pickup section 11 and the image information transmission means 12 differently from a conventional digital camera. Therefore, it is unnecessary for a DSP or the like to be mounted on the photography device 10 which is necessary for image processing. Thus, miniaturization and weight saving of the photography device 10 can be achieved.

Next, with reference to Figure 1, the data processing device 20 will be explained. The data processing device 20 includes a communication means 21 for receiving the image information transmitted from the photography device 10, an image processing means 22 for performing the image processing such as encoding and compression of the image information received, and a storage means 23 for storing the processed image information.

Here, the data processing device 20 is formed of a portable small housing so as to be accommodated in a user's pocket or a bag, etc. A network such as PAN (Personal Area Network), which is narrow in area, is formed between the photography device 10 and the data processing device 20. Therefore, it becomes possible to transmit the image information directly, without involving a gateway or an access point on the way like the Internet or a LAN, and to be free of the connection fee of the Internet.

Note that data transfer between the image information transmission means 12 and the communication means 21 may be carried out in such a way that the image information or the like is transmitted to the data processing device 20 by wired or wireless methods, or using an IC card.

In addition, the communication means 21 has a received image selection means 21a that decides whether or not the image is to be received according to the identification information sent from the photography device 10. The received image selection means 21a has identification information of the photography device 10 that it can receive images from in advance, and receives only the image information transmitted together with the identifying information of the photography device 10 that it can receive images from. Specifically, the image information transmission means 12 of the photography device 10 is designed to transmit the image information and the identification information unique to each photography device 10, to the data processing device 20. The received image selection means 21a is designed to select the image information to be stored based on the identification information. By this structure, even in the case where there are others who are taking photographs using the photography device 10 near the user who possesses the data processing device 20, the image information photographed by the others can be prevented from being stored in the user's data-processing device 20.

Further, the data processing device 20 has a data transfer means 24 for transferring data to an external device 30 such as a personal computer, a cellular phone, PDA, a voice recorder, an electronic pen (for character entry). The data transfer means 24 can transmit the stored image to the external device 30. Accordingly, the image information stored in the storage means 23 can be transferred to the external device 30, thereby enabling a print order of the photographed images and storage of the images in a large-capacity storage medium.

As described above, by separately configuring the photography device 10 and the data processing device 20, in the case where the number of pixels of the image pickup device is required to be increased, replacing the photography device 10 alone is sufficient for the purpose. Similarly, in the case that the image processing is required to be accelerated, by changing the data processing device 20 alone, it is possible to accelerate the image processing or enlarge the capacity of the storage medium. Therefore, the performance of a specific functional part can be improved by replacing only the part required to be improved.

Also, by separately configuring the photography device 10 and the data processing device 20, weight-saving of the photography device 10 per se can be achieved. In addition, it is possible for the user to use only the photography device 10 for photography. Therefore, a higher-quality DSP having a comparatively large area may be used for processing of the data processing device 20, to thereby improve the performance of the image processing means 22. Furthermore, miniaturization of the storage means 23 becomes unnecessary, thus a large-capacity storage medium such as a hard disk can be used as the storage means 23. Note that when the image information stored in the data processing device 20 is carried to laboratory shops or transferred from the data transfer means 24 to a server set in the laboratory shops or the like, the print order is enabled.

Furthermore, conventional digital cameras use storage media of different technical standards according to the model. However, in the photography system 1, the image information is stored in the storage means built in the data processing device 20, and the image information is transferred by the data transfer means 24. Therefore, even if the technical standards are unified or become obsolete, the photography system is not affected by the change of the technical standards.

Here, the photography system 1 shown in Figure 1 illustrates a set formed by a single photography device 10 and a single data processing device 20. However, the structure may be configured by a plurality of photography devices 10 and a single data processing device 20, or a single photography device 10 and a plurality of data processing devices 20. Further, the photography system 1 composed of a combination of a plurality of photography devices 10 and a plurality of data processing devices 20 is also posssible. The photography system 1 with above structure is preferable at the time of photography in an amusement park, a theme park, and an art museum, etc., shown below, and at the time of photography by a plurality of persons in a group tour, a family trip or the like.

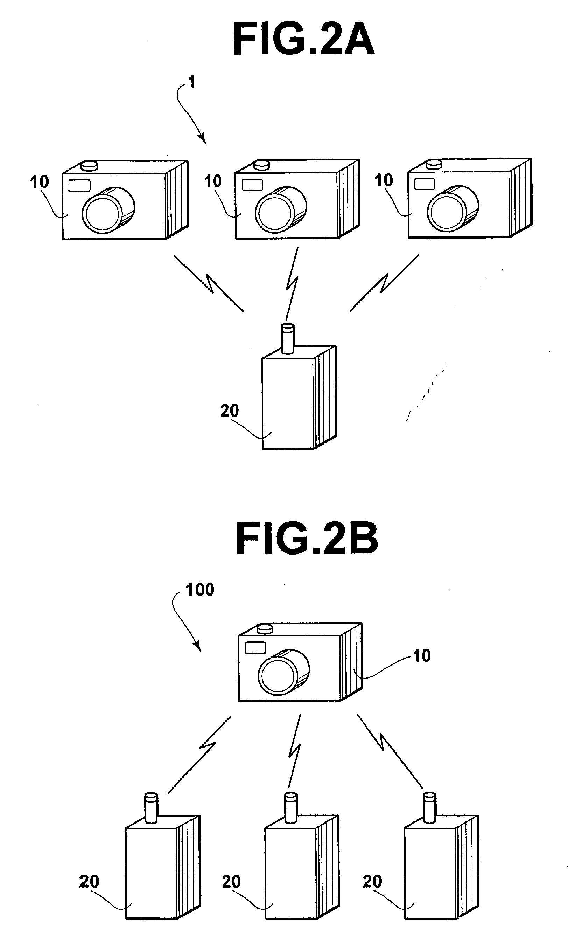

The photography system 1 shown in Figure 2A is formed with a plurality of photography devices 10 and a single data processing device 20. For example, if a plurality of users possess photography devices 10 respectively, and one of them possesses the data processing device 20, and if photography is performed by other users using the photography devices 10, the image information is stored in the data processing device 20. Also, in the case where all of the members of a family each possess the photography device 10 and the data processing device 20 is put into a pocket, a bag, etc., the image information photographed by each member of the family are stored in the data processing device 20.

On the other hand, the photography system 100 shown in Figure 2B is formed with a single photography device 10 and a plurality of data processing devices 20. For example, in the case of a group tour, each of the group members possesses the data processing device 20. And at the time of photography by one of the group members using the photography device 10, the photograph of the group is stored in the data processing devices 20 possessed by other members of the group. Therefore, for example, in the case of a group photo, when the image information photographed by one of the users is given to the other users, it is not necessary to copy the data or make additional prints of the printed image information. This contributes to providing a convenient photography system 100 for the users.

Furthermore, the photography systems 1 and 100 shown in Figures 2A and 2B describe the combination of a plurality of photography devices 10 and a single data processing device 20, or a single photography device 10 and a plurality of data processing devices 20. However, the combination of the above mentioned two examples, that is, a plurality of photography devices 10 and a plurality of data processing devices 20, is also applicable to the photography system of the present invention.

For example, at locations such as a zoo, an art museum, and a factory where the photographic objects that can be photographed are limited; in the case where the photography devices 10 are fixed to a plurality of locations where photography is allowed; if a plurality of users possess the data processing devices 20 respectively; and when photography by operating the photography devices 10 fixed to the locations desired to be photographed, the image information can be stored in the data processing devices 20 possessed by the users. Accordingly, in a zoo or the like, photography services can be offered only at the locations allowed to be photographed, and the users are completely free from being forbidden to take photographs. Thus improvement in the photography service can be achieved.

In addition, the photography devices 10 having telephotographic lenses attached thereto which are beyond individual users' possession are set in a plurality of location of the observatory in Tokyo Tower or the like, for example. Then the image information photographed by using the photography devices 10 can be transmitted to the data processing devices 20 possessed by each individual user.

Furthermore, a rental system of the photography devices 10 or the data processing devices 20 can be built by using the photography system 1 shown in Figures 1 and 2. The above system is built in such a way that users possess the photography devices 10 and the laboratory shops or the theme parks offer rentals of data processing devices 20. At this time, information related to photography technique, information related to photography points, and programs or the like are stored in the data processing device 20 in advance. And simultaneously, by carrying the external device 30 (this can be rented together with the data processing device 20 as a set) having a position detecting function, the positions of the users are specified. Then, the position information is transmitted to the data processing device 20, and based on the position information, the data processing device 20 provides the information regarding photography technique or the like at each photography point to the users.

The users take photographs using the photography devices 10 and store the image information in the data processing devices 20. When the users return the data processing devices 20 to the laboratory shop or to the theme park, the laboratory shop or the like prints the photographed images or stores the images in a large-capacity storage medium such as a CD-R to provide the image information to the users. As described above, if the users possess only the photography devices 10, the users can acquire the photographed images using the data processing devices 20 rented from a theme park and the like.

According to the above-described embodiment, the photography device 10 that performs photography of the photographic objects and acquires the image information, and the portable data processing device 20 that stores the image information acquired by the photography device 10 are formed separately. Therefore, when the photography device 10 only or the data processing device 20 only is required to be improved in function, the photography device 10 only or the data processing device 20 onlymaybe replaced. Thus improvement in the performance specialized for each function can be achieved, making it unnecessary to replace a complete digital camera.

Also, the data processing device 20 is portable and when the image information photographed by the photography device 10 is transmitted to the data processing device 20 directly, the need for transferring the image information to the image accumulation server through the Internet becomes unnecessary. Thus, the image information can be stored surely at a high speed, without being affected by a busy state of a network, such as the Internet.

Especially, when the data processing device 20 stores the image information sent from a plurality of photography devices 10, and if any one of plural users who possess the photography devices 10 possesses the data processing device 20, the image information photographed by the plural users can be stored. Therefore, usability for the users can be improved.

In addition, when the photography device 10 is adapted to transmit the image information to a plurality of data processing devices 20, for example, in the case of the image information such as a photograph of a group photographed by a single photography device 10 for distribution among the plural users, the need for copying the image information later becomes unnecessary. Instead, the image information can be delivered to each user on the spot. Thus, a quality photography service can be offered to the users.

At this time, the image information transmission means 12 has a function to transmit the identification information unique to the photography device 10. When the communication means 21 decides whether or not the image information is to be received according to the identification information transmitted from the image information transmission means 12, only the image information photographed by a specified user is stored in the data processing device 20. In addition, the image processing means 22 stores the image information in the storage means 23 for each photography device 10 based on the identification information, thereby facilitating the management of the stored image information. In addition, as to registration of a camera from which to receive image information, a plurality of cameras can be set, and cameras can be freely added or deleted.

Further, since the data processing device 20 includes the data transfer means 24 that transfers data to the external device 30, the stored image information can be transmitted to a personal computer or the like.

The preferred embodiment of the present invention is not limited to the above embodiment. For example, the data processing device 20 is illustrated in such a way that the image information acquired by the photography device 10 is encoded and compressed by the image processing means 22, and then stored in the storage means 23. However, the image information transmitted from the photography device 10 may be directly stored in the storage means 23, without using the image processing means 22. Specifically, in the case of the portable data processing device 20, better performance is often obtained by the image processing function of equipment such as a personal computer having a higher data processing capability than by the image processing function by a DSP or the like. Accordingly, there is a limit to the quality of the image information processed by the data processing device 20. Therefore, when photography, the image information photographed by the photography device 10 is stored once in the storage means 23 of the data processing device 20 as is. Then, the image information is read from the data processing device 20 to be subj ected to the image processing by using a personal computer. Thus, high-quality images can be acquired.

Further, according to the above-described embodiment, the photography device 10 only includes an image-pick up section 11 and the image information transmission means 12. However, it is also possible that the image information is encoded by the photography device 10 employing a conventionally known reversible coding system having a comparatively small operation quantity, and then the encoded image information is transmitted to the data processing device 20. On the data processing device 20 side, the encoded image information may be decoded once, and then encoded again by employing the latest encoding system.

In addition, as shown in Figure 2A, it is possible that the image processing means 22 of the data processing device 20 has different correction conditions (such as white balance) for each photography device 10, and has a function to make corrections using the different correction conditions respectively for each image information transmitted from each photography device 10. That is, by the above function, the image processing optimized for each photography device 10 is enabled for a plurality of photography devices 10, thus enhancing the quality of a read image.

In addition, the data processing device 20 may have a function to download an image processing program from the external device 30 and may have a function to correct the processing contents of the image processing means 22 by executing the image processing program. By this function, the latest algorithms can be applied to the image coding, the image processing and the like.

Furthermore, in the photography system 1 of Figure 1, the image pick up section 11 constantly performs photography at high resolution, and the image processing means 22 on the side of the data processing device 20 selects a compression rate, judging from the quantity of data and necessity for each image, and then the encoding process is executed.

Also, the above-described embodiment is designed to transmit the identification information unique to the photography device from the photography device 10. However, user ID allocated to each user may be transmitted in addition to the identification information. Further, in the image processing means 22, the image information may be stored in the storage means 23 for each user ID.

Also, the data processing device 20 shown in Figure 1 may be provided with a display section made of, for example, a liquid crystal display monitor and the photographed image maybe displayed by the display section.

Furthermore, in the data transfer means 24 of Figure 1, when the image information is transmitted from the photography device 10, the image information subjected to image processing and the identification information may be transferred to the server of laboratory shops or the like and stored. And at a different timing from the timing of photography, the image information photographed may be sent from the server to the data transfer means 24.

And also, in the case of using the photography system 1 in a theme park, an amusement park or the like, a GPS transmitting means may be provided for each photographic object such as each attraction, and another GPS transmitting means prepared by a photographer may be attached to the photography device 10 or the data processing device 20. And when the photographer takes photographs of the attraction or the like, a focal position of the image pickup section 11 may be adjusted to the photographic obj ect based on the position information of the photographic obj ect and the position information of the photographer. At this time, focus control data thereof is generated by the data processing device 20 and transmitted to the photography device 10.

Furthermore, when the data processing device 20 has a function to download the image processing program from the external device 30, and a function to correct the image processing means 22 by performing the image processing program, the newest algorithm can be applied for the image encoding and image processing, or the like.

Also, when the image information is encrypted and stored in the storage means 23 by the image processing means 22, the stored image information can be decrypted and reproduced only by a specific laboratory shop, and the image information thus stored can be prevented from being seen by third parties.

Furthermore, the above described embodiment assumes that a shutter function is provided on the side of the photography device 10 and operated at the time of photography. However, the shutter button may be provided in a housing of the data processing device 20, so that the photography device 10 may perform photography by wireless control when the shutter button is pressed. At this time, even if the photography device 10 is fixed, the user can move within a photography range to press the shutter. Therefore, a high-quality photography service can be provided to the users.

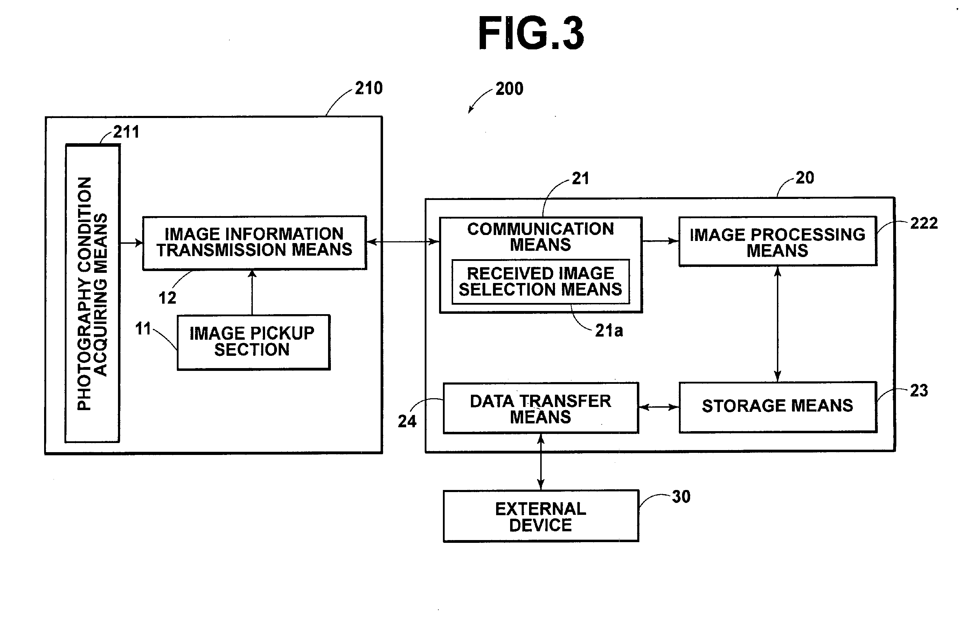

Figure 3 is a block diagram showing another embodiment of the photography system of the present invention. The photography system 200 will be described with reference to Figure 3. Note that in Figure 3, parts having the same structure as those of the photography system 1 of Figure 1, are denoted with the same numerals and symbols, and descriptions thereof will be omitted. The photography system 200 of Figure 3 is different from the photography system 1 of Figure 2, in the structure of the photography device and the image processing method for the image information. Specifically, the photography device 10 of the photography system 200 of Figure 3 has a photography condition acquiring means 211 that acquires photography conditions at the time of photography when acquiring the image information. The photography condition acquiring means 211 is designed to acquire, for example, camera information of the photography device 10 itself and photography time as the photography conditions. Also, the photography condition acquiring means 211 is designed to send the acquired photography conditions to the data processing device 20 via the image information transmission means 12.

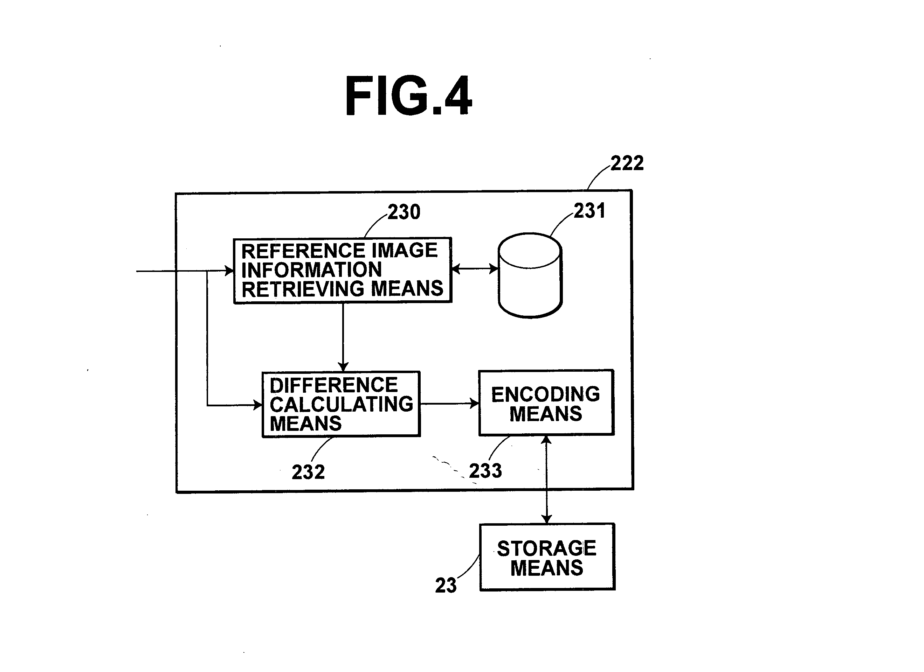

Figure 4 is a block diagram showing an example of an image processing means 222 of a processing device 220. The image processing means 222 of Figure 4 includes a database 231 that stores reference image information obtained by photographing an arbitrary photographic object in advance; a reference image information retrieving means 230 that retrieves the reference image information most similar to the image information out of the database 231 based on the photography conditionsacquired by the photography condition acquiring means;a difference calculation means232that calculates a difference between the reference image information retrieved by the reference image information retrieving means 230 and the image information acquired by photography; and an encoding means 233 that encodes the difference between the reference image information and the image information calculated by the difference calculation means.

Here, the reference image information of the database 231 refers to preprocessed information, which is information subjected to, for example, decoding or size normalization in advance. The reference image information includes image information photographed by users and image information transferred (downloaded) from the external device 30, for example. In addition, the reference image information is stored while being correlated with the photography conditions at the time of acquiring the reference image information and identification data for identifying the reference image information such as a file name, in the database 231. The reference image information retrieving means 230 is designed to retrieve the reference image information most similar to the image information out of the database 231 by retrieving the photography conditions of the reference image information most similar to the photography conditions of the image information.

Note that in the reference image information retrievingmeans 230, the reference image information can be retrieved using not only the photography conditions but also the position information. In this case, the reference image information retrieving means 230 is designed to acquire the position information from the external device 30 such as a cellular phone having a GPS function, via the data transfer means 24 . The position information is stored in the database 231 while being correlated with the reference image information. The reference image information retrieving means 230 can retrieve the reference image information using the position information together with the photography conditions.

The difference calculating means 232 has a function to calculate the difference between the reference image information retrieved by the reference image information retrieving means 230 and the acquired image information. The encoding means 233 has a function to encode the calculated difference and store it in the storage means 23. Here, a conventionally known encoding algorithm can be employed as an encoding system.

Further, the encoding means 233 has a function to encode the reference image information identification data (such as a file name) showing the reference image information in addition to the difference data. Decoding of the image information is enabled by using the reference image information and the difference data. In this way, not all the image information acquired by photography is encoded and stored, but the difference from the reference image information is encoded, thereby reducing the amount of data of the encoded image information.

Note that decoding of the image information including the encoded difference data is performed by adding the decoding result of the reference image information to the decoding result of the difference. Further, when the image information photographed by the users is transferred from the data processing device 220 to personal computers or the like of the users, the image information decodedby the above-describedmethod is transferred to the personal computers. Then, the image information as a whole is encoded according to a known encoding algorithm by the personal computers. That is, the image information is stored in a state of reduced amount of data on the portable data processing device 220. The images are encoded in a form that allows browsing and processing in the personal computers when the photographed images are used by the users.

As described above, not all the photographed image information is encoded and stored in the storage device 23, but the image difference information is stored in the storage means, thereby reducing the amount of data of the image information . Thus, a larger quantity of image information can be stored in the storage means 23.

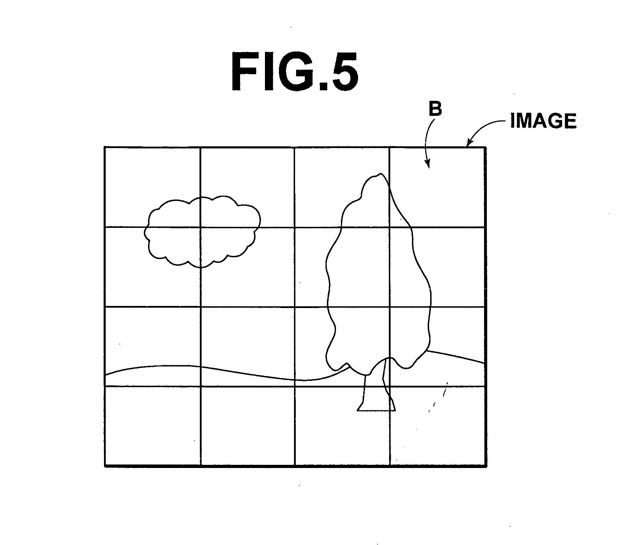

Note that the difference calculating means 232 is designed to calculate the difference between the image information and the reference image information in a whole photography screen. However, as shown in Figure 5, it is possible that input image and the reference image information are divided into a plurality of blocks to calculate the difference between the input image and the reference image information in each block, and the difference for each block is encoded. At this time, the contents of data to be encoded and stored in the storage means 23 are block position information, reference image identification data, block position information in the reference image, and difference encoding data.

Further, Figure 3 illustrates the case where the reference image information is stored in the storage means 23 of the data processing device 20 which produces the difference image information. However, as shown in Figures 2A and 2B, when a plurality of data processing devices 20 exist in the photography systems 1 and 100, it is satisfactory that at least one of the data processing devices 20 has the reference image information. The other data processing devices 20 may acquire the reference image information from the data processing device 20 having the reference image information.

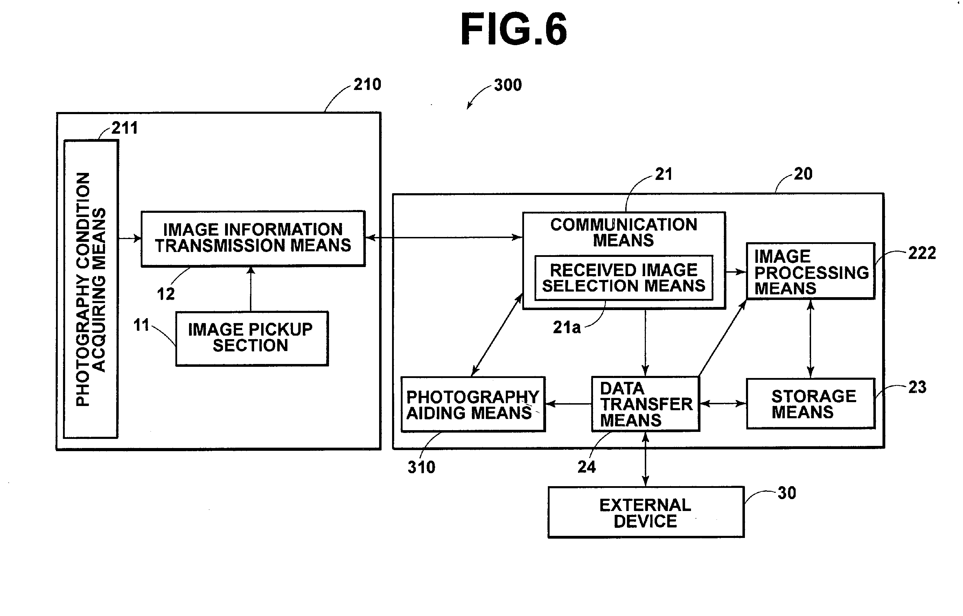

Figure 6 is a block diagram showing a third embodiment of the photography system. A photography system 300 will be described with reference to Figure 6. Note that in the photography system 300 of Figure 6, the parts having the same structures as those of the photography system 200 of Figure 3 are denoted by the same numerals and symbols, and descriptions thereof will be omitted.

The photography system 300 of Figure 6 is different from the photography system 200 of Figure 3 in that a data processing device 320 has a photography aiding means 310 attached thereto. The photography aiding means 310 enables the acquisition of image information in a good photography state, by warning users to take photographs of photographic objects again when the photographic objects are in a poor photography state.

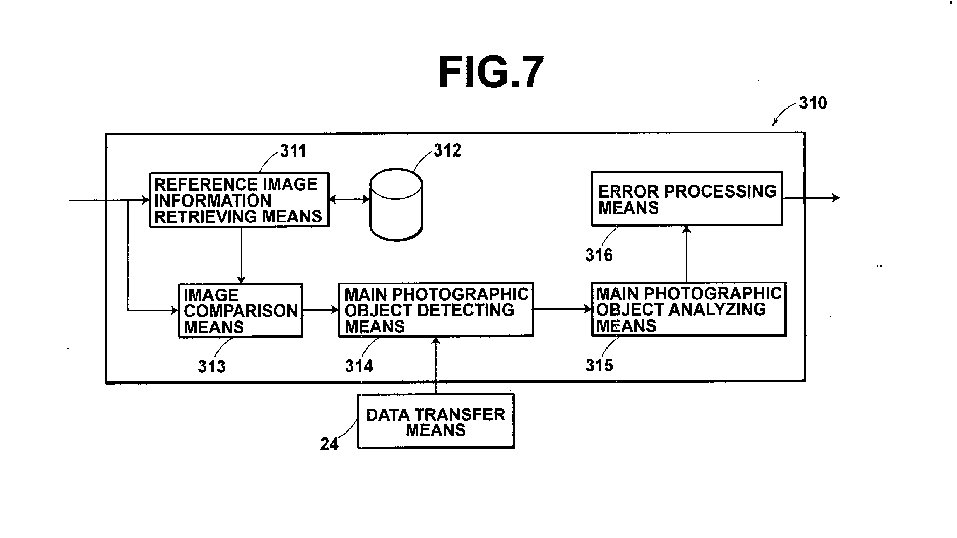

Specifically, Figure 7 is a block diagram showing an example of the photography aiding means. The photography aiding means 310 of Figure 7 includes a database 312 that stores the reference image information; a reference image information retrieving means 311 that retrieves the reference image information most similar to the photographed image information out of the database 312 based on the photography conditionsacquired by the photography condition acquiring means 211; an image comparison means 313 that compares the reference image information retrieved by the reference image information retrieving means 311 and the image information; a main photographic object detecting means 314 that detects a main photographic object in the image information based on a comparison result obtained by the image comparison means 313; a main photographic object analyzingmeans 315 that analyses a photography state of the main photographic object of the image information detected by the main photographic object detecting means 314; and an error processing means 316 that determines whether or not an error exists in the photography state analyzed by the main photographic object analyzing means 315.

Here, the reference image information of the database 312 refers to preprocessed information, which is image information subjectedto, forexample, decodingorsizenormalizationinadvance. The reference image information includes image information photographed by users and image information transferred (downloaded) from the external device 30, for example . In addition, in the database 312, the reference image information is stored while being correlated with the photography conditions at the time of acquiring the reference image information and identification data for identifying the reference image information, such as a file name. Further, the reference image information retrieving means 311 is designed to acquire the position information from the external device 30 such as a cellular phone or the like having a GPS function, via the data transmission means 24, and to detect the reference image information using the photography condition and the position information. Note that the position information is stored in the database 312 while being correlated with the reference image information. The reference image information retrieving means 311 is designed to retrieve the reference image information most similar to the image information out of the database 312 by retrieving the photography conditions of the reference image information most similar to the photography conditions of the image information and the position information.

The image comparison means 313 has a function to detect a part where the image information matches the reference image information by comparing the image information with the reference image information. The main photographic object detecting means 314 analyzes the main photographic object based on the matching part detected by the image comparison means 313 and the position information of the users transferred from the external device 30. If the photography condition acquiring means 211 of the photography device 210 has a direction detecting function that detects the direction of the photography device 10 at the time of photography, and if the main photography object detecting means 314 analyzes the main photography object based on the position information and the direction of the photography device 210, detecting accuracy of the main photography object can be enhanced.

The main photography object analyzing means 315 analyzes the image quality of the main photography object of the image information detected by the main photographic object detecting means 314, for example, by comparing the image quality of the main photographic object of the image information with the image quality of the main photographic obj ect of the reference image information. For example, when the sharpness of the main photographic object of the image information is lower than the sharpness of the main photography object of the reference image information by a predetermined level or more, which is due to wobbling, defocusing or the like, then the main photography object analyzing means 315 determines a photography state of the main photographic object to be poor.

Note that the image quality can be evaluated using not only the sharpness but also a S/N ratio or the like. Also, the main photographic object analyzing means 315 may analyze the photography state based on the main photographic object of the image information such as edge components, without comparing the main photographic object of the image information with the main photographic object of the reference image information. Further, the main photographic object analyzing means 315 may determine whether or not the density of the main photographic object of the image information is different from the density of the main photographic object of the reference image information by a predetermined amount or more. In this case, the density components of the image information are used as an image analysis parameter.

The error processing means 316 performs processing so that photography can be performed to acquire the image information of the photographic object in a good photography state when the photography condition of the image information is analyzed to be poor. Specifically, when a display section such as a liquid crystal display is fitted on the photography device 210, the error processing means 316 provides output to the display section to the effect that an error was generated at the time of photography. Alternatively, when a speaker is fitted on the photography device 210, the data processing device or the external device, then the error processing means 316 provides output by voice or the like to the effect that an error was generated at the time of photography. Accordingly, even in the case where users fail in acquiring images having high image qualities due to wobbling or the like during photography, the same photographic object can be photographed again owing to the warning outputted from the photography system.

Note that the error processing means 316 shows the case of providing output to the effect that an error has been generated. However, a control method of the photography device 210 may be changed. For example, the error processing means 316 may change settings so that a shutter speed becomes faster than in a standard mode, or so that photography is performed twice with a shutter speed faster than that in the standard mode to form two images at the time of recording in the storage means 23, thereby reducing noise.

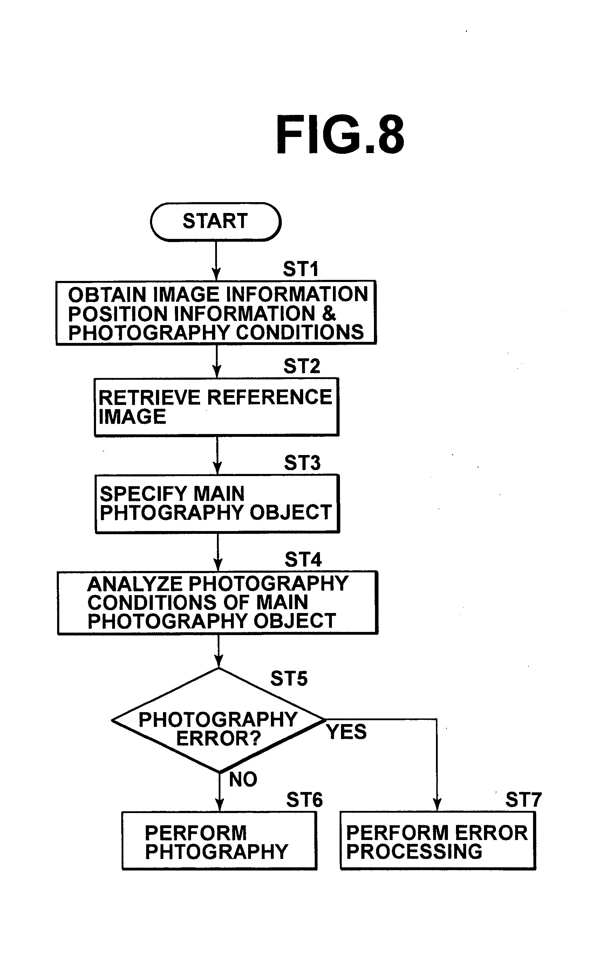

Figure 8 is a flow chart showing an example of the operation of the photography system of Figure 6 . The example of the operation of the photography system will be described with reference to Figures 6 to 8. First, using the photography device 210, photography is performed by users. At this time, the photography condition is acquired by the photography condition acquiring means of Figure 6 and sent to the data processing device 20. Meanwhile, when photography is started using the photography device 210, the data processing device acquires the position information from the external device 30 or the like (step ST1).

Next, in the reference image information retrieving means of Figure 7, the reference image information most similar to the acquired image information is retrieved out of the database 312 based on the acquired photography condition and the position information (step ST2). Thereafter, the image information acquired by photography and the retrieved reference image information are compared in the image comparison means 313, to detect amatchingpoint of both the images. In the main photographic object detecting means 314, the main photographic object of the image information is specified based on the matching point and different point (step ST 3).

Next, the specified main photographic object and the main photographic object of the reference image information are compared by the main photographic object analyzing means 315, to detect the difference of the sharpness (step ST 4) . The error processing means 316 determines whether or not the difference of the sharpness is within an allowable range (step ST 5). When the difference of the sharpness is not beyond the allowable range, the photography is continued as it is (step ST 6). On the other hand, when the difference of the sharpness of the image information is beyond the allowable range and in the lower direction, then error processing is performed, such as outputting to the display section or the like of the photography device 210 a warning to the effect that an error has been generated (step ST 7).

Note that in the above-described embodiments, the photography state is judged by the sharpness. However, in the case where the density of the main photographic object is different from the reference image information by a predetermined quantity or more, a warning message indicating a failure in exposure may be outputted. Further, the main photographic object analyzing means 315 may check the inclination of the screen and instruct a camera monitor to display photography aiding horizontal/vertical lines according to the main photographic object. For example, the main photographic object analyzing means 315 may instruct a camera monitor to display the horizontal line for checking the horizon of a horizontally long structure, or to display the vertical line for checking a vertical line of a high-rise structure.

Further, the main photographic object detecting means 314 specifies the main photographic object based on the matching/different points between the image information and the reference image information. However, the main photographic object may be a person. At this time, by using a known facial recognition algorithm, image characteristics of a facial area in the photographed image and the facial area in the reference image are compared to judge image blur, defocus and failure in exposure (such as close-photography using strobe light and a back light) .

The present invention is not limited to the above-described embodiments. For example, the data processing devices 20, 220 and 320 according to the above-described embodiments may have a control means for sharing various functions allocated to the photography device 10 with the external device 30, in accordance with the type of the external device 30. Specifically, for example, when the external device 30 is image displaying equipment, the control means may stop the operation of the display means of the photography device 10. Also, when the external device 30 is a PDA having a microphone function, the control means may stop the operation of the microphone provided on the photography device 10.

Further, in each of the above-described embodiments, the image processing means 22 and 222 serve as means for processing of the image information. However, it is possible that various kinds of information are acquired by the image processing means from the external device 30 via the data transfer means 24 and the acquired information is stored while being correlated with the image information. Specifically, it is possible that the image processingmeans acquires, for example, time information, position information, voice data, and various kinds of content data downloaded from the external device 30, and stores the information in the storage means 23 while correlating it with the image information.

In addition, in the case of the photography systems 1, 100, 200 and 300 having a plurality of the data processing devices 20, 220 and 320 as shown in Figure 2B, each of the data processing devices 20, 220 and 320 may have a transfer function of the image information between each of the data processing devices 20, 220 and 320. With this structure, free capacity of a specific data processing device can be expanded. Further, the image information to be stored in each of the data processing devices 20, 220 and 320 may be classified for each type and for each scene, and then stored therein.

## Claims

1. A photography system comprising:
a photography device that performs photography to acquire image information; and
a portable data processing device formed separately from the photography device that stores the image information acquired by the photography device,
wherein the photography device includes an image information transmission means that directly transmits the acquired image information to the data processing device.

2. The photography system according to claim 1,
wherein the photography device has identification information unique to the photography device and the image information transmission means has a function to transmit the identification information to a plurality of data processing devices.

3. The photography system according to either one of claims 1 and 2,
wherein the data processing device receives the image information from a plurality of the photography devices and a received image selection means selects the image information to be received according to unique identification information allocated to said each photography device, transmitted from the image information transmission means.

4. The photography system according to any one of claims 1 to 3,
wherein the data processing device classifies the image information for each piece of the identification information and stores the image information.

5. The photography system according to any one of claims 1 to 4,
wherein the data processing device has a correction condition for correcting the image information for each of a plurality of the photography devices.

6. The photography system according to any one of claims 1 to 5,
wherein the data processing device has a function to encrypt the image information and store the encrypted image information in the storage means.

7. The photography system according to any one of claims 1 to 6,
wherein the data processing device includes an image processing means for encoding the image information, and a storage means for storing the image information encoded by the image processing means.

8. The photography system according to claim 7, wherein the image processing means comprises:
a photography condition acquiring means for acquiring a photography condition when the photography device acquires the image information;
a database that stores reference image information obtained by photographing an arbitrary photographic object in advance;
a reference image information retrieving means for retrieving the reference image information most similar to the image information out of the database based on the photography condition acquired by the photography condition acquiring means;
a difference calculation means for calculating a difference between the reference image information retrieved by the reference image information retrieving means and the image information; and
an encoding means for encoding the difference between the reference image information and the image information calculated by the difference calculation means.

9. The photography system according to any one of claims 1 to 8,
wherein the data processing device comprises:
a photography condition acquiring means for acquiring a photography condition when the photography device acquires the image information;
a database that stores reference image information obtained by photographing an arbitrary photographic object in advance and a reference photography condition when the photographic object is photographed;
a reference image information retrieving means for retrieving reference image information most similar to the photographed image information out of the database, based on the photography condition acquired by the photography condition acquiring means and the reference photography condition;
an image comparison means for comparing the reference image information retrieved by the reference image information retrieving means and the image information;
a main photographic object detecting means for detecting a main photographic object in the image information, based on a comparison result obtained by the image comparison means;
a main photographic object analyzing means for analyzing a photography state of the main photographic object of the image information detected by the main photographic object detecting means; and
an error process ing means for per forming process ing to enable acquisition of the photographic object in a good photography state when a photography state analyzed by the main photographic object analyzing means is analyzed to be poor.

10. The photography system according to any one of claims 1 to 9,
wherein the data processing device comprises a data transfer means that transfers data to an external device.

11. The photography system according to any one of claims 1 to 10,
wherein the photography device is fixed to a specific photography location.
